# EUROPEAN PATENT APPLICATION

(11) **EP 1 873 622 A2**
(43) Date of publication of application: **02.01.2008**
(21) Application number: 07108752.2
(22) Date of filing: 23.05.2007
(51) Int. Cl.: G06F 3/048

(54) **A keypad touch user interface method and a mobile terminal using the same**

(30) Priority: 26.06.2006 KR 20060057393
(71) Applicant: Samsung Electronics Co., Ltd., Suwon-si, Gyeonggi-Do (KR)
(72) Inventor: Kang, Tae Young, unknown (KR); Hong, Nho Kyung, unknown (KR); Lee, Chang Hoon, Gyeonggi-do (KR); Lee, Bong Won, unknown (KR)
(74) Representative: Grünecker, Kinkeldey, Stockmair & Schwanhäusser Anwaltssozietät

(57) **Abstract**

A user interface method and a mobile terminal is disclosed. If a finger touches and moves in a specific direction on a keypad having a touch sensor, a touch is detected by the touch sensor and a type of touch direction is identified by a control unit according to the angle of a touch direction. A screen of a display unit is partitioned into a plurality of blocks, and a screen highlight is located at a specific block. The control unit for moving the screen highlight on the display unit according to the type of the touch direction. A path of the screen highlight is set in one of a forward direction with continuous movement, a forward direction with discontinuous movement, a backward direction with continuous movement, anda backward direction with discontinuousmovement. A user interface according to the present invention can include a pointer in the display uni t, the pointer being controlled by linking a pointer position with a touch position.

## Description

### BACKGROUND OF THE INVENTION

### 1. Field of the Invention

The present invention relates generally to a user interface in a mobile terminal, and more particularly, to a keypad touch user interface method using fingers and a mobile terminal using the same.

### 2. Description of the Prior Art

With recent development of technology in mobile terminals, such as mobile phones and personal digital assistants, mobile terminals have become widely used in daily life. With popularization of the mobile terminals, user requirements have diversified and competition between suppliers of mobile terminals is high. Accordingly, mobile terminals providing more functions and improved convenience are continuously being developed. Particularly by adding various multimedia functions and wireless Internet functions to the mobile terminals, the operation environment of the mobile terminals is now being improved to the level of personal computing.

The sizes of mobile terminals are relatively small, because the mobile terminals must basically be portable. Therefore, the sizes of input and output units such as keypads and LCD screens are limited. In order to improve user accessibility and convenience in performing various and complicated functions of a mobile terminal under this limitation, a new user interface must be developed by considering the above points. Further, the necessity for a suitable user interface is increasing, because of the requirement for an operation environment similar to a personal computing environment, when compared to the operation environment of conventional mobile terminals.

Various methods for user interfacing including a method using a touch screen have been suggested. The method using the touch screen has advantages for user accessibility and convenience, because a menu on a screen may directly be selected and executed by using a stylus pen. However, this method has disadvantages in that a user must always carry the stylus pen, the mobile terminal cannot be operated with only one hand, and the operation is limited if the stylus pen is missing.

In this method, either a normal keypad, or a virtual keypad displayed on a screen, is used to input characters or numbers. However, operation of the normal keypad is complicated, because the stylus pen on a screen and the normal keypad must be operated alternatively. The virtual keypad requires precise operation, because an input window is small due to the virtual keypad occupying a portion of a screen and thereby having itself only a relatively small size.

### SUMMARY OF THE INVENTION

The present invention has been made in view of the above problems, and an object of the present invention is to provide a user interface suitable for performing various functions with improved user accessibility and convenience in a mobile terminal.

Another object of the present invention is to provide a new user interface in a mobile terminal by replacing a conventional method using a touch screen and a stylus pen.

Still another object of the present invention is to provide a user interface enabling easier operation with one hand in a mobile terminal.

Still further another obj ect of the present invention is to provide a user interface enabling an operation environment of a mobile terminal similar to a personal computing environment.

In order to achieve the above objects, the present invention, provides a keypad touch user interface method and a mobile terminal using the same.

A user interface method according to the present invention includes detecting a touch generated on a keypad; identifying a touch direction; and moving a highlighted area of a screen in the identified touch direction, wherein a screen of a display unit is partitioned into a plurality of blocks and the screen highlight is located at one of the blocks.

In the user interface method, identifying a touch direction includes classifying the touch direction into at least two types according to the angle of the touch direction. Preferably, a path of the screen highlight is set according to the type of the touch direction, and includes at least two from a forward direction with continuous movement, forward direction with discontinuous movement, backward direction with continuous movement, and backward direction with discontinuous movement.

A touch sensor installed under the keypad functions to detect a touch. Moving a screen highlight can be performed when the touch is detected at a specific position for longer than a predetermined time, or while the touch is being detected. The display unit includes a pointer and a pointer position is preferably linked with a touch position. Moving a screen highlight be performed regardless of the pointer position while the touch is being detected.

A user interface method according to the present invention for a mobile terminal having a screen of a display unit partitioned into a plurality of blocks and a screen highlight located at one of the blocks includes detecting a touch generated in a specific direction on a keypad; classifying a touch direction into at least two types according to the angle of the touch direction; identifying a path of the screen highlight according to the type of the touch direction; and moving the screen highlight along the path of the screen highlight.

In the user interface method, the path of the screen highlight includes at least two from a forward direction with continuous movement, forward direction with discontinuous movement, backward direction with continuous movement, and backward direction with discontinuous movement. If the angle of the touch direction is greater than 0° and less than 180°, the path of the screen highlight can be set in the backward direction; and if the angle of the touch direction is greater than 180° and less than 360°, the path of the screen highlight can be set in the forward direction. If the absolute value of the angle of the touch direction subtracted by 90° is greater than a predetermined critical angle, the path of the screen highlight canbe set in a direction with continuous movement; and if the absolute value of the angle of the touch direction subtracted by 90° is less than the predetermined critical angle, the path of the screen highlight can be set in a direction with discontinuous movement. If the absolute value of the angle of the touch direction subtracted by 270° is greater than a predetermined critical angle, the path of the screen highlight can be set in the direction with continuous movement; and if the absolute value of the angle of the touch direction subtracted by 270° is less than the predetermined critical angle, the path of the screen highlight can be set in the direction with discontinuous movement.

Additionally, the screen highlight path can be set: in a backward direction with continuous movement, if the angle θ of the touch direction satisfies the condition 0° < θ ≤ 180° and |θ - 90°| > δ wherein δ is a critical angle; in a backward direction with discontinuous movement, if the angle θ of the touch direction satisfies the condition 0° < θ ≤ 180° and |θ - 90° | ≤ δ ; in a forward direction with continuous movement, if the angle θ of the touch direction satisfies the condition 180° < θ ≤ 360° and |θ - 270°| > δ; and in a forward direction with discontinuous movement, if the angle θ of the touch direction satisfies the condition 180° < θ ≤ 360° and |θ - 270° | ≤ δ.

### BRIEF DESCRIPTION OF THE DRAWINGS

The above and other obj ects, features and advantages of the present invention will become more apparent from the following detailed description in conjunction with the accompanying drawings, in which:
FIG. 1 is a block diagram showing a configuration of a mobile terminal according to the present invention;
FIGS. 2A and 2B are flow charts showing a user interface method according to the present invention;
FIG. 3 is a perspective view showing an example of operation in a user interface method according to the present invention;
FIG. 4 is a view showing the types of touch direction;
FIG. 5 is a view showing another example of operation in a user interface method according to the present invention; and
FIGS. 6A and 6B are views showing examples of operation in a user interface method according to the present invention.

### DETAILED DESCRIPTION OF PREFERRED EMBODIMENTS

Hereinafter, preferred embodiments of the present invention are described in detail with reference to the accompanying drawings. The same reference symbols identify the same or corresponding elements in the drawings. In the following description of the present invention, a detailed description of known constructions and processes incorporated herein will be omitted when it may obscure the subject matter of the present invention with unnecessary detail.

### Definition of Terms

1. "Keypad" applied to the present invention is a normal alphanumeric keypad formed in a mobile terminal body, and is not a virtual keypad displayed on an Liquid Crystal Display (LCD).
2. "Touch" means a behavior in which a user contacts a keypad of a mobile terminal with a finger.
3. "Press" means a user's behavior of operating a normal keypad by applying a force to a specific key with a finger.
4. "Screen highlight" is a highlighted area of a display screen.

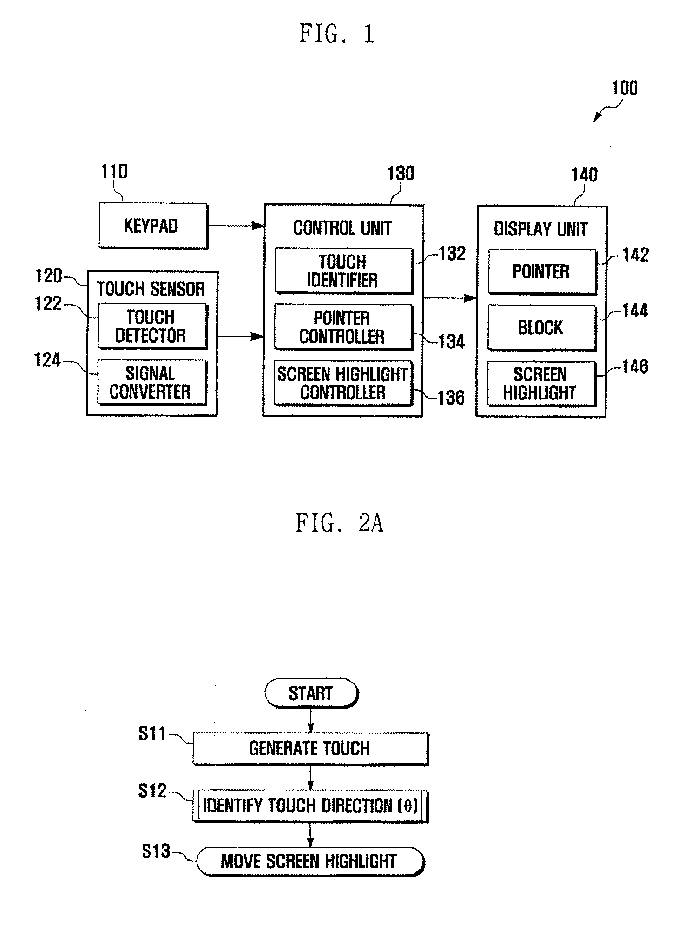

FIG. 1 is a block diagram showing a configuration of a mobile terminal according to the present invention. Referring to FIG. 1, a mobile terminal 100 includes a keypad 110, a touch sensor 120, a control unit 130, and a display unit 140. The touch sensor 120 includes a touch detector 122 for detecting a change of a physical property according to a touch and a signal converter 124 for converting the change of physical property to a touch signal. The control unit 130 includes a touch identifier 132, a pointer controller 134, and a screen highlight controller 136. The display unit 140 includes a pointer 142, a block 144, and a screen highlight 146.

The keypad 110 is a portion of a key input unit formed in a specific area of a mobile terminal body, and alphanumeric keys are disposed on the keypad 110 in a format of 3 columns × 4 rows or 5 columns × 4 rows. The keypad 110 enables input of characters and numbers by a user's normal operation of pressing, or short-cut commands for performing special functions.

The touch sensor 120 is installed under the keypad 110, and preferably occupies the same location as the keypad 110. The touch sensor 120 is a kind of pressure sensor, such as a gliding sensor, and various types of touch sensors can be used. The touch sensor 120 detects, if the user performs a touch operation on the keypad 110, generation of the touch by detecting a change of physical properties such as resistance and capacitance. The detected change of the physical property is converted to an electric signal ("touch signal"). The touch signal detected by the touch sensor 120 is transmitted to the touch identifier 132 of the control unit 130.

The touch sensor 120 is partitioned into a plurality of physical and virtual areas. Therefore, if a touch is generated, the corresponding position of the touch can be identified. Position information is transmitted to the control unit 130 together with the touch signal. The touch signal is set as an input signal for operation control of the pointer 142 and the screen highlight 146 displayed on the display unit 140. The touch signal generated by touching the keypad 110 is completely different from a normal input signal generated by pressing the keypad 110. Apart from a function allocated to a normal keypad input signal, a function for a pointer and screen highlight control is allocated to the touch signal.

The control unit 130 controls general operation of the mobile terminal 100, and includes a touch identifier 132, a pointer controller 134, and a screen highlight controller 136. The touch identifier 132 receives the touch signal transmitted by the touch sensor 120, and identifies a touch direction therefrom. The touch direction can be identified by a continuous change of the touch position while the user's finger moves on the keypad 110. The pointer controller 134 controls operation of the pointer 142 by linking the touch position on the keypad 110 with a position of the pointer 142 displayed on the screen of the display unit 140. The screen highlight controller 136 controls operation of the screen highlight 146 displayed on the screen of the display unit 142 according to the touch direction identified by the touch identifier 132.

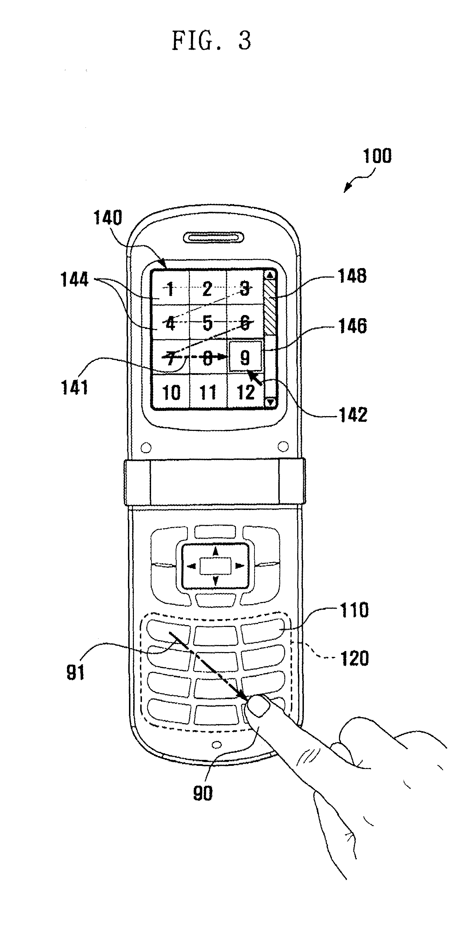

The display unit 140 displays various menus for the mobile terminal 100, information input by the user, and information to be provided for the user. The display unit 140 is preferably an liquid crystal display (LCD) . As shown in FIG. 3, the display unit 140 includes the pointer 142, which is similar to that in a personal computing environment, and particularly, further includes the block 144 and the screen highlight 146. The position of the pointer 142 is linked with a touch position by the pointer controller 134, and the pointer position changes corresponding to a change of the touch point. The blocks 144 are formed in a rectangular, or similar, shape by equally partitioning the screen of the display unit 140, and display predetermined information. The screen highlight 146 is located at a specific block of the blocks 144, indicating that the block is selected, and moves among the blocks 144 according to the control of the screen highlight controller 136.

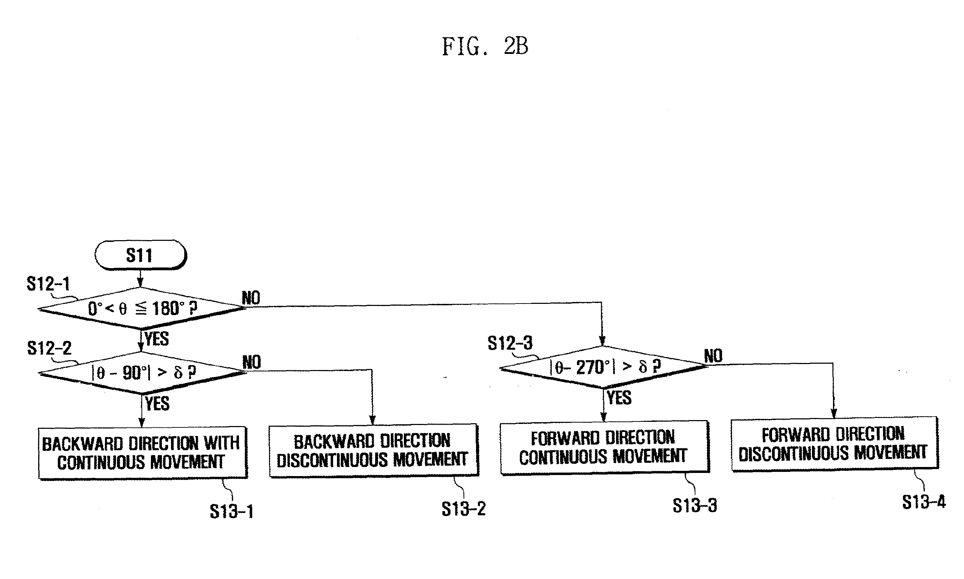

FIGS. 2A and 2B are flow charts showing a user interface method according to the present invention, and FIG. 3 is a view showing an example of operation in a user interface method according to the present invention.

Referring to FIGS. 1 to 3, firstly, generation of a touch is detected (S11). If a user touches keypad 110 with a finger and moves in a specific direction 91 (for example, in the lower right direction as shown in FIG. 3), the touch detector 122 of the touch sensor 120 located under the keypad 110 detects a change of physical property of the position touched by a finger. The signal converter 124 converts the detected change of physical property to a touch signal, and transmits the touch signal to the control unit 130. Simultaneously, information on the touch position is transmitted also with the touch signal.

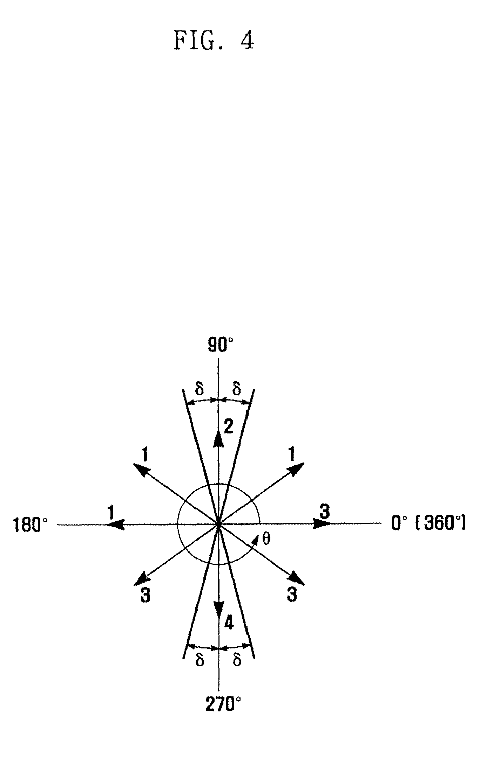

Subsequently, the touch identifier 132 of the control unit 130 receives the touch position information transmitted with the touch, and identifies a touch direction (i.e., finger movement direction 91) (S12). The touch direction is classified into several types according to an angle in the range 0° to 360°. FIG. 4 is a view showing the types of touch direction.

Referring to FIG. 4, when the angle (θ) of the touch direction is 0° (or 360°), the type of touch direction corresponds to a third direction. When the angle (θ) of the touch direction is greater than 0° and less than 90° - δ, wherein δ indicates a predetermined critical angle, the type of the touch direction corresponds to a first direction. Table 1 lists the touch directions shown in FIG. 4.

**Table 1**

| Angle(θ) of touch direction | Type of touch direction |
|---|---|
| 0° < θ < 90° - δ | First direction |
| 90° - δ ≤ θ ≤ 90° + δ | Second direction |
| 90° + δ < θ ≤ 180° | First direction |
| 180° < θ < 270° - δ | Third direction |
| 270° - δ ≤ θ ≤ 270° + δ | Fourth direction |
| 270° + δ < θ ≤ 360° | Third direction |

Table 1 can be summarized as set forth in Table 2.

**Table 2**

| Angle(θ) of touch direction | | Type of touch direction |
|---|---|---|
| 0° < θ ≤ 180° | \|θ - 90°\|> δ | First direction |
| | \|θ - 90°\|≤ δ | Second direction |
| 180° < θ ≤ 360° | \|θ - 270°\|> δ | Third direction |
| | \|θ - 270°\|≤ δ | Fourth direction |

As shown in Tables 1 and 2, and FIG. 4, the touch direction is classified into 4 types. However, the present invention is not limited to this classification method. In the above example, δ has a value in the range 0° to 15° approximately.

A path of the screen highlight is preset such that the screen highlight moves along different paths according to the type of touch direction. As shown in FIG. 3, when the touch direction 91 is the lower rightward direction and the type is a third direction, the path 141 is preset such that the screen highlight 146 moves continuously in the forward direction 1, 2, 3, 4, .... Similarly, the path 141 of the screen highlight 146 can be set to path ① continuously moving in the forward direction 1, 2, 3, 4, ...; path ② continuously moving in the backward direction..., 4, 3, 2, 1; path ③ discontinuously moving in the forward direction 1, 4, 7, ...; and path ④ discontinuously moving in the backward direction ..., 7, 4, 1. Table 3 shows examples of the path 141 of the screen highlight 146 according to the type of the touch direction.

**Table 3**

| Type of touch direction | Screen highlight path |
|---|---|
| First direction | Backward direction with continuous movement |
| Second direction | Backward direction with discontinuous movement |
| Third direction | Forward direction with continuous movement |
| Fourth direction | Backward direction with discontinuous movement |

However, the present invention is not limited to the above examples of screen highlight path.

In FIGS. 1 to 3, if the type of touch direction 91 is determined according to the result of identification by the touch identifier 132, the screen highlight controller 136 moves the screen highlight 146 along a path allocated to the type of touch direction in step S13.

Step S12 of identifying a touch direction and step S13 of moving a screen highlight 146 can be performed as shown in FIG. 2B. Foremost, the touch identifier 132 identifies whether the angle (θ) of the touch direction is in the range 0° < θ≤ 180° (S12-1). If the touch direction is in the range 0° < θ ≤ 180°, the touch identifier 132 identifies whether the angle (θ) of the touch direction satisfies the condition |θ - 90°|> δ (S12-2). If the touch direction is not in the range 0° < θ ≤ 180° (i.e. 180° < θ ≤ 360°), the touch identifier 132 identifies whether the angle (θ) of the touch direction satisfies the condition |θ - 270°|> δ (S12-3) .

If the angle (θ) of the touch direction satisfies the condition |θ - 90°|> δ, the screen highlight 146 moves in a backward direction with continuous movement (step S13-1). If the angle (θ) of the touch direction does not satisfy the condition |θ - 90°| > δ, the screen highlight 146 moves in a backward direction with discontinuous movement (step S13-2). If the angle (θ) of the touch direction satisfies the condition |θ - 270°| > δ, the screen highlight 146 moves in a forward direction with continuous movement (step S13-3). If the angle (θ) of the touch direction does not satisfy the condition |θ - 270°| > δ, the screen high light 14 6 moves in a forward direction with discontinuous movement in step S13-4.

In addition to step S12 of identifying a touch direction and the step S13 of moving a screen highlight 146, the pointer controller 134 links the touch position on the keypad 110 with the position of the pointer 142 on the display unit 140 by using touch position information. Accordingly, if the finger 90 moves on the keypad 110, each touch position is continuously linked with the position of the pointer 142, and the pointer 142 is activated on the screen of the display unit 140.

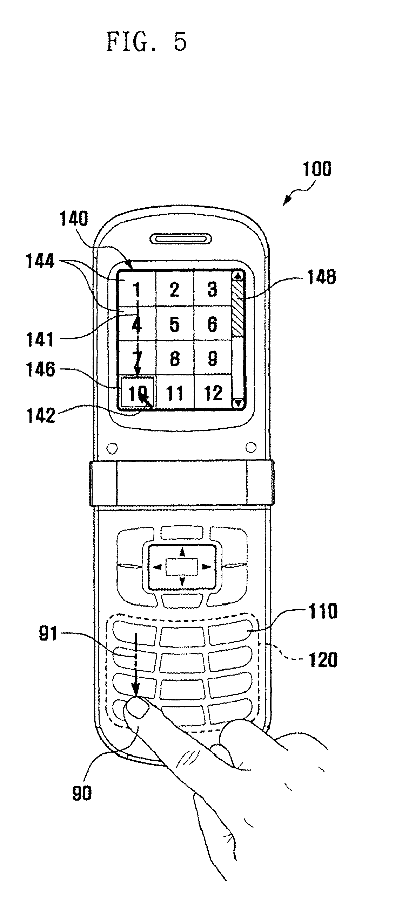

Whereas, FIG. 3 shows an example where the path 141 of the screen highlight 146 is in the forward direction with continuous movement. FIG. 5 is a view showing an example of operation where the path 141 of the screen highlight 146 is in the forward direction with discontinuous movement.

As shown in FIGS. 3 and 5, if the finger 90 moves in a specific direction 91 on the keypad 110, accordingly the pointer 142 moves on the screen of the display unit 140. The screen highlight 146 located at a specific block of the blocks 144 moves among the blocks 144 along a predetermined path 141 corresponding to the moving direction 91 of the finger 90.

The pointer 142 is preferably linked in real time with the movement of the finger 90. Alternatively, the screen highlight 146 can be set to move only when the finger 90 remains on the keypad 110 for longer than predetermined time duration after moving in a specific direction. If the finger 90 is released from the keypad 110 while the screen highlight 146 is moving along the path 141, the screen highlight 146 does not move.

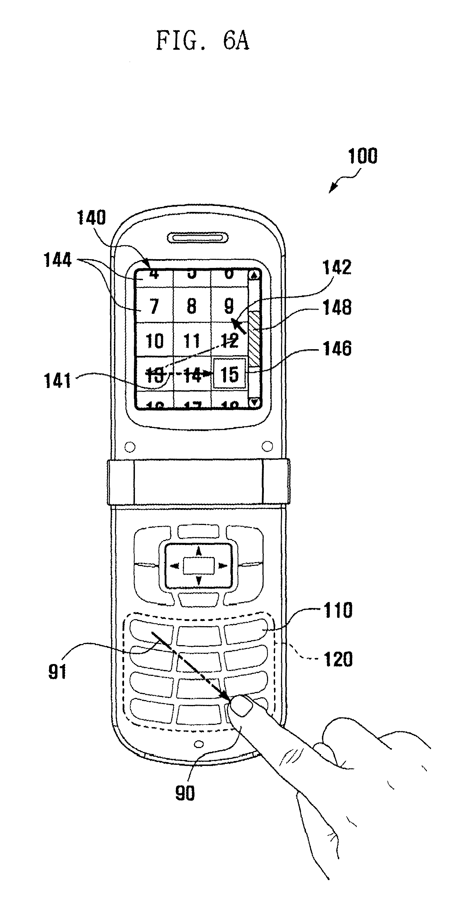

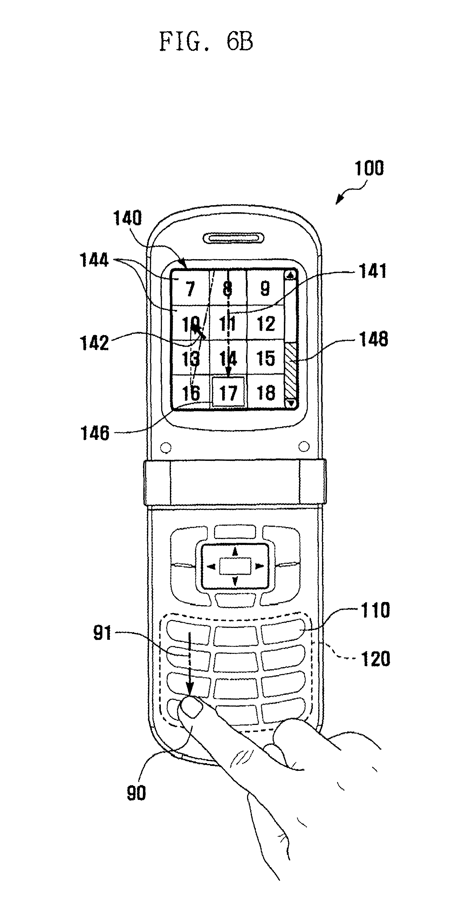

If all blocks 144 cannot be displayed on the screen of the display unit 140 at the same time, a scroll bar 148 is displayed on the right side of the screen of the display unit 140. In this case, the screen highlight 146 can be set to move up to a block 144 on which the pointer 142 is located. However, the screen highlight 146 is preferably set to move up to the last block beyond the current position of the pointer 142 as long as the finger touches the keypad 110. Such an example is shown in FIGS. 6A and 6B.

FIG. 6A shows an example of operation corresponding to FIG. 3, and FIG. 6B shows another example of operation corresponding to FIG. 5. As shown in FIGS. 6A and 6B, if the finger 90 continuously contacts the keypad 110, the scroll bar 148 starts to move in the lower direction, and the blocks 144 start to move in the upper direction. At this moment, the pointer 142 moves upwards together with the blocks 144 while staying at its previously located position on a block, and the screen highlight 146 moves towards the lower-most block along the path 141 by passing through the position of the pointer 142.

The present invention provides a user for interface executing a predetermined function by detecting a touch and identifying the type of the touch when a user touches a keypad installed with a touch sensor by using their fingers. The user interface utilizing a keypad touch method is suitable for execution of various applications in a mobile terminal, because it enables execution of a normal function of a keypad press operation and an additional function.

In particular, the user interface method according to the present invention enables, by using a keypad touch, control of pointer operation on a display unit and screen highlight movement between blocks, when a plurality of blocks are displayed on the screen of the display unit. Accordingly, the present invention provides an operation environment of a mobile terminal close to a personal computing environment, simplicity in use even in a screen having a complicated option structure, and excellent user accessibility as well as convenience.

In the user interface method according to the present invention, because operation of a mobile terminal is performed only in a keypad area differently from the conventional touch screen method, operation on both keypad area and display area are not required. Accordingly, the user interface according to the present invention provides a much simpler operation compared to a conventional method, and operation with one hand is possible, because use of a stylus pen is unnecessary. Further, the user interface according to the present invention has an economical effect of cost saving compared to a conventional touch screen method, because the manufacturing cost of the keypad is lower than that of the touch screen.

Although preferred embodiments of the present invention have been described in detail hereinabove, it should be understood that manyvariations and modifications of the basic inventive concept herein described, which may appear to those skilled in the art, will still fall within the spirit and scope of the the present invention as defined in the appended claims.

## Claims

1. A user interface method in a mobile terminal, comprising:
detecting a touch generated on a keypad;
identifying a touch direction; and
moving a highlighted area of a screen (screen highlight) in the identified touch direction, wherein a screen of a display unit is partitioned into a plurality of blocks and the screen highlight is located at one of the blocks.

2. The user interface method of claim 1, wherein identifying the touch direction comprises classifying the touch direction into at least two types according to an angle of the touch direction.

3. The user interface method of claim 2, wherein a path of the screen highlight is set according to the type of the touch direction.

4. The user interface method of claim 3, wherein the path of the screen highlight comprises at least two from a forward direction with continuous movement, a forward direction with discontinuous movement, a backward direction with continuous movement, and a backward direction with discontinuous movement.

5. The user interface method of claim 1, wherein detecting a touch is performed by a touch sensor installed under the keypad.

6. The user interface method of claim 1, wherein moving the screen highlight is performed when the touch is detected at a specific position for longer than a predetermined time.

7. The user interface method of claim 1, wherein moving the screen highlight is performed while the touch is being detected.

8. The user interface method of claim 1, wherein the display unit comprises a pointer and a pointer position, which are linked with a touch position.

9. The user interface method of claim 8, wherein moving the screen highlight is performed regardless of the pointer position while the touch is being detected.

10. A user interface method for a mobile terminal having a screen of a display unit partitioned into a plurality of blocks and a screen highlight located at one of the blocks, comprising:
detecting a touch generated in a specific direction on a keypad;
classifying a touch direction into at least two types according to an angle of the touch direction;
identifying a path of the screen highlight according to the type of the touch direction; and
moving the screen highlight along the path of the screen highlight.

11. The user interface method of claim 10, wherein the path of the screen highlight comprises at least two from a forward direction with continuous movement, a forward direction with discontinuous movement, a backward direction with continuous movement, and a backward direction with discontinuous movement.

12. The user interface method of claim 10, wherein, if the angle of the touch direction is greater than 0° and less than 180°, the path of the screen highlight is set in the backward direction; and if the angle of the touch direction is greater than 180° and less than 360°, the path of the screen highlight is set in the forward direction.

13. The user interface method of claim 10, wherein, if an absolute value of the angle of the touch direction subtracted by 90° is greater than a predetermined critical angle, the path of the screen highlight is set in a direction with continuous movement; and if the absolute value of the angle of the touch direction subtracted by 90° is less than the predetermined critical angle, the path of the screen highlight is set in a direction with discontinuous movement.

14. The user interface method of claim 10, wherein, if the absolute value of the angle of the touch direction subtracted by 270° is greater than a predetermined critical angle, the path of the screen highlight is set in a direction with continuous movement; and if the absolute value of the angle of the touch direction subtracted by 270° is less than the predetermined critical angle, the path of the screen highlight is set in a direction with discontinuous movement.

15. The user interface method of claim 10, wherein the screen highlight path is set:
in the backward direction with continuous movement, if the angle θ of the touch direction satisfies the condition 0° < θ ≤ 180° and |θ- 90°|> δ, wherein δ is a predetermined critical angle;
in the backward direction with discontinuous movement, if the angle θ of the touch direction satisfies the condition 0° < θ ≤ 180° and |θ- 90°|≤ δ;
in the forward direction with continuous movement, if the angle θ of the touch direction satisfies the condition 180° < θ ≤ 360° and |θ - 270°|> δ; and
in the forward direction with discontinuous movement, if the angle θ of the touch direction satisfies a condition 180° < θ ≤ 360° and |θ - 270°|≤ δ.

16. A mobile terminal comprising:
a keypad disposed with alphanumeric keys;
a touch sensor installed under the keypad for detecting a touch on the keypad;
a touch identifier for identifying a direction of the touch;
a display unit having a screen partitioned into a plurality of blocks and a screen highlight located at one of the blocks; and
a screen highlight controller for controlling the screen highlight on the display unit according to the touch direction.

17. The mobile terminal of claim 16, wherein the display unit further comprises a pointer.

18. The mobile terminal of claim 17, further comprising a pointer controller for linking the touch position on the keypad with a pointer position on the display unit.

19. The mobile terminal of claim 16, wherein the touch sensor substantially occupies the same location as the keypad.

20. The mobile terminal of claim 16, wherein the touch sensor comprises a touch detector for detecting a change of physical property of the touch and a signal converter for converting the change of physical property to a touch signal.

21. The mobile terminal of claim 16, wherein the touch sensor is partitioned into a plurality of areas.
